# EUROPEAN PATENT APPLICATION

(11) **EP 3 410 305 A1**
(43) Date of publication of application: **05.12.2018**
(21) Application number: 17744025.2
(22) Date of filing: 17.01.2017
(51) Int. Cl.: G06F 13/00, G06F 3/16

(54) **INFORMATION PROCESSING DEVICE, INFORMATION PROCESSING METHOD, INFORMATION MANAGEMENT DEVICE, AND INFORMATION MANAGEMENT METHOD**

(30) Priority: 27.01.2016 JP 2016013314
(71) Applicant: Yamaha Corporation, Hamamatsu-shi, Shizuoka 430-8650 (JP)
(72) Inventor: IWASE, Hiroyuki, Hamamatsu-shi Shizuoka 430-8650 (JP); SETO, Yuki, Hamamatsu-shi Shizuoka 430-8650 (JP); OCHI, Yumiko, Hamamatsu-shi Shizuoka 430-8650 (JP); ISHIDA, Tetsuro, Hamamatsu-shi Shizuoka 430-8650 (JP); IWATA, Takahiro, Hamamatsu-shi Shizuoka 430-8650 (JP); MORIGUCHI, Shota, Hamamatsu-shi Shizuoka 430-8650 (JP)
(74) Representative: Hoffmann Eitle
(86) International application number: PCT/JP2017/001394
(87) International publication number: WO 2017/130794

(57) **Abstract**

An information processing apparatus includes: a related information generator configured to generate a related information that is related to a guide voice specified by a sound-specifying information; an identification information generator configured to generate an identification information that is to be notified to a terminal device upon emission of the guide voice; a first association manager configured to associate the sound-specifying information with the identification information; and a second association manager configured to associate the related information with the identification information.

## Description

### TECHNICAL FIELD

The present invention relates to a technique for providing information to a user of a terminal device.

### BACKGROUND ART

Various techniques have been proposed for sending information, such as images or sound, to a terminal device. For example, Patent Document 1 discloses a technique for emitting a guide voice to which an additional information is added, the additional information being related to the guide voice that is announced in facilities such as those for a transport system or commercial facilities. A terminal device retrieves the additional information from a reception result of the guide voice and displays the retrieved additional information.

### Related Art Document

### Patent Document

Patent Document 1: Japanese Patent Application Laid-Open Publication No. 2000-207170

### SUMMARY OF THE INVENTION

### Problem to be Solved by the Invention

There may be assumed to be problems in that it is in reality difficult to manage a correspondence between a guide voice and an additional information because there will be emitted various types of guide voices in facilities such as those for a transport system or commercial facilities. In view of the above circumstances, the present invention aims to easily and precisely manage a correspondence between a guide voice and a related information therefor.

### Means of Solving the Problems

In order to solve the above problem, an information processing apparatus according to a preferred mode of the present invention includes: a related information generator configured to generate a related information that is related to a guide voice specified by a sound-specifying information; an identification information generator configured to generate an identification information that is to be notified to a terminal device upon emission of the guide voice; a first association manager configured to associate the sound-specifying information with the identification information; and a second association manager configured to associate the related information with the identification information.

An information processing method according to a preferred mode of the present invention includes: generating a related information that is related to a guide voice specified by a sound-specifying information; generating an identification information that is to be notified to a terminal device upon emission of the guide voice; associating the sound-specifying information with the identification information; and associating the related information with the identification information.

An information management apparatus according to a preferred mode of the present invention includes: an information manager configured to identify an identification information that corresponds to a sound-specifying information output from a guidance instruction apparatus by referring to management data in which, for each of multiple guide voices, a sound-specifying information that specifies an array of speech segments forming the guide voice is associated with an identification information of the guide voice; and a signal generator configured to generate a modulation signal indicative of the identification information identified by the information manager.

An information management method according to a preferred mode of the present invention includes: identifying an identification information that corresponds to a sound-specifying information output from a guidance instruction apparatus by referring to management data in which, for each of multiple guide voices, a sound-specifying information that specifies an array of speech segments forming the guide voice is associated with an identification information of the guide voice; and generating a modulation signal indicative of the identified identification information.

### BRIEF DESCRIPTION OF THE DRAWINGS

FIG. 1 is a diagram showing an exemplary configuration of a first embodiment of the present invention.
FIG. 2 is an explanatory diagram for a guide voice.
FIG. 3 shows flowcharts for operations of a guidance system.
FIG. 4 is a diagram showing an exemplary configuration of an information processing apparatus.
FIG. 5 is a flowchart for an operation of the information processing apparatus.
FIG. 6 is a flowchart for an operation of an information processing apparatus in a second embodiment.

### MODES FOR CARRYING OUT THE INVENTION

### First Embodiment

### Guidance System 12

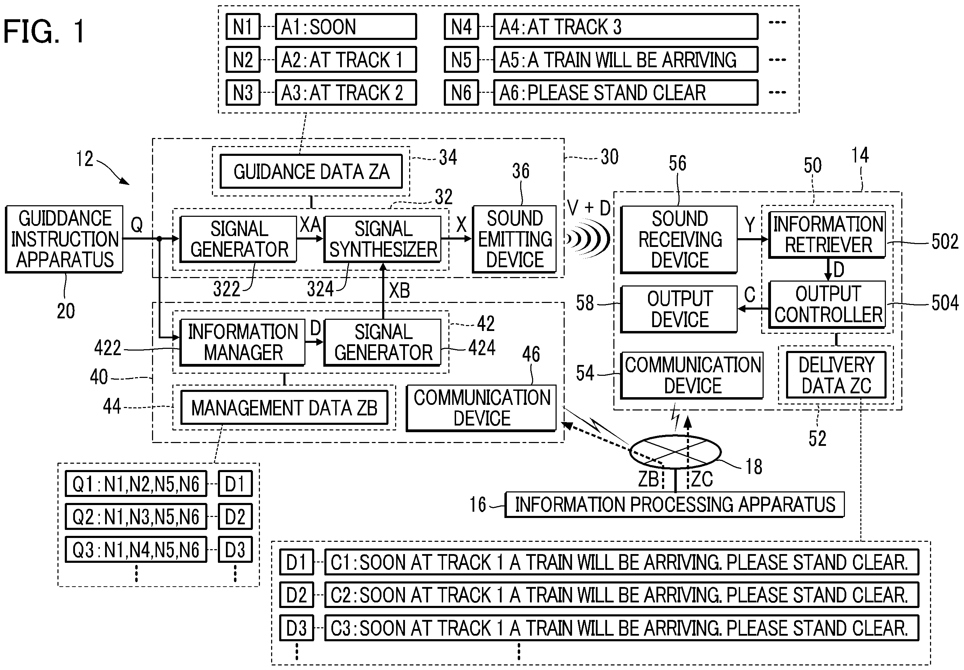

FIG. 1 is a diagram showing an exemplary configuration of a guidance system 12 in a first embodiment. The guidance system 12 of the first embodiment is an audio system that emits a voice (hereinafter referred to as "guide voice") V for notifying users of information concerning service status of trains. The guidance system 12 is installed in a subway station, for example. Examples of the guide voice V includes: a voice announcing arrival or destination of a train; a voice announcing a service status, such as delay, of a train; a voice urging users to take precautions when they get on or get off; and a voice announcing occurrence of an emergency situation, such as a disaster or an accident. A user would use a train while carrying a terminal device 14. The terminal device 14 is a portable information terminal, such as a mobile phone or a smartphone. An electronic message board that is installed, for example, in facilities of a railway operator, or a guide message board, such as an electronic signboard (e.g., digital signage) that is installed in commercial facilities, may also be preferably used as the terminal device 14. In the following, description will be given with respect to a single terminal device 14 for illustrative purposes, while in reality, multiple users may use the services of the guidance system 12.

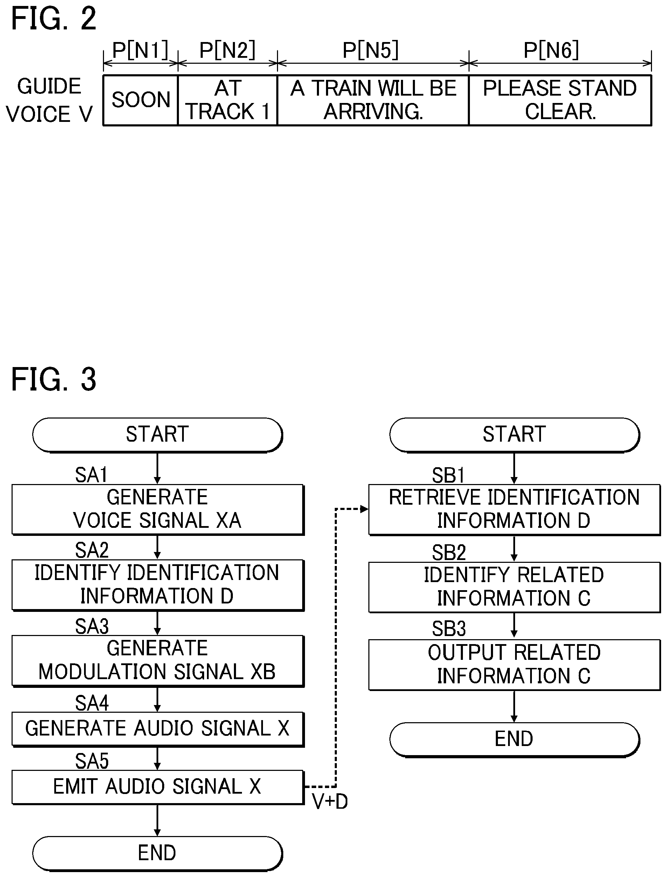

FIG. 2 is an explanatory diagram of a guide voice V in the first embodiment. As shown in the example in FIG. 2, the guide voice V in the first embodiment is a voice in which prerecorded pieces of speech (hereinafter referred to as "speech segments") P are arranged in a predetermined order along a time axis. As a speech segment P, a piece of speech in a unit of a word, a paragraph, or a sentence is preferably used. Guide voices V, each having different speech content, are generated by modifying a combination of speech segments P, as appropriate. Here, speech synthesized by a publicly known speech synthesis technique may be used as speech segments P.

As shown in FIG. 1, the guidance system 12 in the first embodiment is a computer system that includes a guidance instruction apparatus 20, a voice guidance apparatus 30, and an information management apparatus 40. The guidance instruction apparatus 20 and the information management apparatus 40 are each connected to the voice guidance apparatus 30 by wire or wirelessly.

The guidance instruction apparatus 20 provides to the voice guidance apparatus 30 a sound-specifying information Q that specifies speech content of a guide voice V (i.e., information to be conveyed to a user). The sound-specifying information Q in the first embodiment specifies an array (a combination including an arrangement order) of speech segments P that form the guide voice V. More specifically, the sound-specifying information Q includes, for each of the speech segments P forming the guide voice V, a speech segment identification information N. A speech segment identification information N is a sign for uniquely identifying a corresponding speech segment P (e.g., a number uniquely given to each speech segment P). The sound-specifying information Q is provided from the guidance instruction apparatus 20 to the voice guidance apparatus 30 as needed, the sound-specifying information Q being generated in accordance with, for example, instructions from a guide such as a staff member of a railroad company or a predetermined condition related to a service status of a train (e.g., arrival of a train to a particular location).

The voice guidance apparatus 30 of FIG. 1 is an automated broadcast device that emits a guide voice V specified by a sound-specifying information Q provided from the guidance instruction apparatus 20. The voice guidance apparatus 30 includes a control device 32, a storage device 34, and a sound emitting device 36. The voice guidance apparatus 30 may be realized by multiple separately formed devices. The guidance instruction apparatus 20 and the voice guidance apparatus 30 may be formed together in a single device.

The storage device 34 is formed by a publicly known storage medium, such as a semiconductor storage medium or a magnetic storage medium, and stores a program executed by the control device 32 and various data used by the control device 32. The storage device 34 in the first embodiment stores guidance data ZA. As shown in the example in FIG. 1, the guidance data ZA are a data table in which a speech segment identification information N (N1, N2, ...) and a speech datum A (A1, A2, ...) are recorded for each of the speech segments P that can be specified by the sound-specifying information Q. A speech datum A of a freely chosen speech segment P represents a waveform of the speech segment P along the time axis.

The control device 32 is realized by a processing device, such as a CPU (central processing unit), and executes various types of arithmetic processing and control processing. The control device 32 of the first embodiment serves as a signal generator 322 and a signal synthesizer 324 by executing the program stored in the storage device 34.

The signal generator 322 generates a speech signal XA of the guide voice V that is specified by the sound-specifying information Q provided by the guidance instruction apparatus 20. The speech signal XA is a signal indicative of waveform of the guide voice V along the time axis. More specifically, the signal generator 322 of the first embodiment acquires, from the guidance data ZA in the storage device 34, multiple speech data A of speech segments P each corresponding to a corresponding one of multiple speech segment identification information N specified by the sound-specifying information Q. The signal generator 322 then generates a speech signal XA by arranging the multiple speech data A of the speech segments P in an order specified by the sound-specifying information Q. The speech datum A of a single speech segment P may be shared in generating of speech signals XA representative of different guide voices V. The signal synthesizer 324 in FIG. 1 synthesizes the speech signal XA of the guide voice V and a modulation signal XB (described later) generated by the information management apparatus 40 to generate an audio signal X. For example, the audio signal X is generated by addition of the speech signal XA to the modulation signal XB.

The audio signal X generated by the control device 32 is provided to the sound emitting device 36. The sound emitting device 36 is audio equipment (e.g., a loudspeaker) that emits sound that is in accordance with audio signals X provided by the control device 32. For illustrative purposes, illustration of a D/A converter that converts audio signals X from digital format to analog format is omitted.

The sound-specifying information Q output from the guidance instruction apparatus 20 is also provided to the information management apparatus 40 via the voice guidance apparatus 30, for example. The information management apparatus 40 generates a modulation signal XB that is in accordance with the sound-specifying information Q. The information management apparatus 40 of the first embodiment is realized by an information terminal, such as a personal computer or a tablet terminal, that is connected to the voice guidance apparatus 30 by wire or wirelessly. The information management apparatus 40 includes a control device 42, a storage device 44, and a communication device 46. The information management apparatus 40 and the voice guidance apparatus 30 may be formed together in a single device. The communication device 46 in FIG. 1 communicates with other devices via a communication network 18 that includes a mobile communication network or the Internet.

The storage device 44 is formed by a publicly known storage medium, such as a semiconductor storage medium or a magnetic storage medium. The storage device 44 stores a program executed by the control device 42 and various data used by the control device 42. The storage device 44 of the first embodiment stores management data ZB used for generation of the modulation signal XB that is in accordance with the sound-specifying information Q. The management data ZB are a data table in which each of multiple sound-specifying information Q (Q1, Q2, ...) that can be output from the guidance instruction apparatus 20 is associated with an identification information D (D1, D2, ...). A sound-specifying information Q that specifies speech content of a freely chosen guide voice V is associated with an identification information D that uniquely identifies the guide voice V. In other words, an identification information D is given to each combination of speech segments P that form a guide voice V.

The control device 42 is realized by a processing device, such as a CPU, and executes various types of arithmetic processing and control processing. The control device 42 of the first embodiment serves as an information manager 422 and a signal generator 424 by executing the program stored in the storage device 44.

The information manager 422 identifies, from the management data ZB, an identification information D that corresponds to the sound-specifying information Q generated by the guidance instruction apparatus 20. In other words, the identification information D for the guide voice V indicated by the guidance instruction apparatus 20 is identified. The signal generator 424 of the first embodiment generates a modulation signal XB representative of a sound component that indicates the identification information D identified by the information manager 422. More specifically, the signal generator 424 generates the modulation signal XB by frequency modulation in which a carrier wave such as a sine wave of a predetermined frequency is modulated by the identification information D, or by modulation processing, such as spread modulation of the identification information D with use of a spread code. The identification information D is included in the modulation signal XB as a sound component of a predetermined frequency band. More specifically, the frequency band of the sound component of the identification information D is included in a range (e.g., between 18 kHz and 20 kHz, inclusive) that is situated higher than a frequency band of sounds, such as music sound or voice (e.g., guide voice V) that a user would hear in a normal environment.

The modulation signal XB generated by the signal generator 424 is provided to the voice guidance apparatus 30, and as described above, the audio signal X, which is derived by synthesizing the speech signal XA of the guide voice V and the modulation signal XB of the identification information D, is provided to the sound emitting device 36. In this way, the sound component of the identification information D is emitted from the sound emitting device 36 along with the guide voice V. That is, the sound emitting device 36 of the first embodiment serves as audio equipment that emits a guide voice V, and also serves as a transmitter that transmits the identification information D of the guide voice V to the surroundings by sound communication, which uses sound, i.e., air vibrations, as a transmitting medium. Emission of the guide voice V and transmission of the identification information D are executed each time a sound-specifying information Q is output from the guidance instruction apparatus 20.

As shown in the example in FIG. 1, the terminal device 14 of the first embodiment includes a control device 50, a storage device 52, a communication device 54, a sound receiving device 56, and an output device 58. The control device 50 is realized by a processing device, such as a CPU, and executes various types of arithmetic processing and control processing. The communication device 54 communicates with other devices via the communication network 18.

The storage device 52 is formed by a publicly known storage medium, such as a semiconductor storage medium or a magnetic storage medium, and stores a program executed by the control device 50 (hereinafter referred to as "information presentation program") and various data used by the control device 50. The storage device 52 of the first embodiment stores delivery data ZC. The delivery data ZC include multiple related information C that correspond to different guide voices V. The delivery data ZC of the first embodiment are a data table in which the identification information D (D1, D2, ...) of each of guide voices V that can be indicated by the guidance instruction apparatus 20 is associated with the related information C (C1, C2, ...) of the guide voice V. The related information C that corresponds to a freely chosen guide voice V is information (content) that is related to the guide voice V. The related information C of the first embodiment is a character string (hereinafter referred to as "speech character string") that represents speech content of the guide voice V. In the first embodiment, since a related information C is prepared for each guide voice V, an identification information D may be said to be information for identifying the corresponding related information C. The related information C is not limited to a speech character string. For example, a voice or an image (e.g., still image or moving image) that represents information related to a guide voice V may be used as a related information C.

The sound receiving device 56 is audio equipment (a microphone) that receives ambient sounds and generates audio signals Y. More specifically, the sound receiving device 56 generates an audio signal Y that represents sound emitted by the sound emitting device 36 of the voice guidance apparatus 30 (i.e., mixed sound of a guide voice V and a sound component of an identification information D). Thus, the sound receiving device 56 of the first embodiment may be used for a voice call between terminal devices 14 or voice recording when a moving image is recorded, and also serves as a receiver that receives an identification information D by sound communication. For illustrative purposes, illustration of an A/D converter that converts audio signals Y generated by the sound receiving device 56 from analog format to digital format is omitted. The output device 58 outputs a related information C. The output device 58 of the first embodiment is a display device (e.g., liquid crystal display device) that displays a speech character string represented by a related information C. A sound emitting device that emits a voice represented by a related information C may be used as the output device 58.

The control device 50 is realized by a processing device, such as a CPU, and executes various types of arithmetic processing and control processing. As shown in the example in FIG. 1, the control device 50 of the first embodiment serves as an information retriever 502 and an output controller 504 by executing the information presentation program stored in the storage device 52. Here, the functions of the control device 50 may be distributed to multiple devices, or some of the functions of the control device 50 may be realized by dedicated electric circuitry.

The information retriever 502 retrieves the identification information D from the audio signal Y generated by the sound receiving device 56. More specifically, the information retriever 502 selects from the audio signal Y a sound component in the frequency band that includes the identification information D by using, for example, a bandpass filter, and executes, on the sound component, demodulation processing corresponding to the modulation processing of the identification information D, thereby retrieving the identification information D. As described in the above example, the information retriever 502 retrieves the identification information D of the guide voice V emitted from the sound emitting device 36 of the voice guidance apparatus 30.

The output controller 504 causes the output device 58 to output the related information C corresponding to the identification information D retrieved by the information retriever 502. More specifically, the output controller 504 selects from the delivery data ZC in the storage device 52 the related information C corresponding to the identification information D retrieved by the information retriever 502, and causes the output device 58 to display the speech character string of the selected related information C. As will be understood from the above description, for each emission of a guide voice V by the voice guidance apparatus 30, the speech character string of the guide voice V is displayed on the terminal device 14. Accordingly, an advantage is obtained in that a user is able to confirm the information notified by a guide voice V, even if the user is in a situation in which it is difficult for the user to catch the guide voice V (e.g., in a case where the user is wearing earphones or headphones, or in a case where the user has impaired hearing).

FIG. 3 shows flowcharts of operations by the guidance system 12 and those by the terminal device 14 in the first embodiment. The processing of FIG. 3 is executed with output of a sound-specifying information Q from the guidance instruction apparatus 20 serving as a trigger, the sound-specifying information Q specifying speech content of a guide voice V.

The signal generator 322 of the voice guidance apparatus 30 uses the guidance data ZA stored in the storage device 34 to generate a speech signal XA of the guide voice V specified by the sound-specifying information Q (SA1). The information manager 422 of the information management apparatus 40 identifies an identification information D of the guide voice V specified by the sound-specifying information Q from the management data ZB (SA2). The signal generator 424 generates a modulation signal XB that indicates the identified identification information D (SA3). The signal synthesizer 324 of the voice guidance apparatus 30 generates an audio signal X by synthesizing the speech signal XA of the guide voice V and the modulation signal XB that includes the identification information D of the guide voice V (SA4). By the signal synthesizer 324 providing the audio signal X to the sound emitting device 36 (SA5), the guide voice V and the sound component of the identification information D are emitted from the sound emitting device 36 and reach a terminal device 14 near the sound emitting device 36.

The information retriever 502 of the terminal device 14 retrieves the identification information D of the guide voice V from an audio signal Y generated by the sound receiving device 56 (SB1). The output controller 504 identifies, from the delivery data ZC stored in the storage device 52, a related information C that corresponds to the identification information D retrieved by the information retriever 502 (SB2), and causes the output device 58 to display the identified related information C (SB3). As a result of the processing described above as an example, in parallel with or subsequent to emission of the guide voice V by the guidance system 12 (sound emitting device 36), the related information C that is related to the guide voice V is displayed on the terminal device 14.

### Information Processing Apparatus 16

The information processing apparatus 16 in FIG. 1 defines correspondence between multiple sound-specifying information Q and multiple identification information D in the management data ZB used by the information management apparatus 40. The information processing apparatus 16 also defines correspondence between multiple identification information D and multiple related information C in the delivery data ZC used by the terminal device 14. Before initiation of the voice guidance by the guidance system 12, the information processing apparatus 16 of the first embodiment generates the management data ZB used by the information management apparatus 40 and the delivery data ZC used by the terminal device 14. As shown in the example in FIG. 1, the management data ZB generated by the information processing apparatus 16 is forwarded to the information management apparatus 40 and is stored in the storage device 44, and the delivery data ZC generated by the information processing apparatus 16 is forwarded to the terminal device 14 and is stored in the storage device 52.

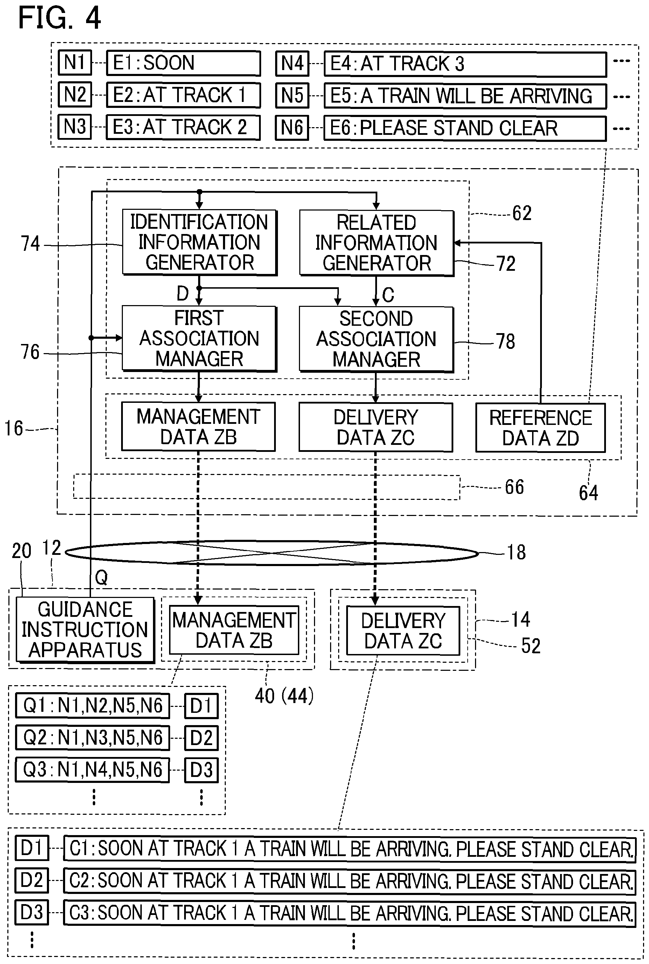

FIG. 4 is a diagram showing an exemplary configuration of the information processing apparatus 16 of the first embodiment. As shown in the example in FIG. 4, the information processing apparatus 16 of the first embodiment is a computer system that includes a control device 62, a storage device 64, and a communication device 66. The information processing apparatus 16 is realized by, for example, a server (typically a web server) that is connected to the communication network 18. Alternatively, the information processing apparatus 16 may be realized by an information terminal, such as a personal computer or a tablet terminal, that is installed in a railway station together with the guidance system 12. The communication device 66 communicates with other devices, such as the information management apparatus 40 or the terminal device 14, via the communication network 18.

The storage device 64 is formed by a publicly known storage medium, such as a semiconductor storage medium or a magnetic storage medium, and stores a program executed by the control device 62 and various data used by the control device 62. The storage device 64 of the first embodiment stores reference data ZD that represent speech content of each speech segment P used for emission of a guide voice V. As shown in the example in FIG. 4, the reference data ZD of the first embodiment are a data table in which a speech segment identification information N (N1, N2, ...) and a registration datum E (E1, E2, ...) are recorded for each of speech segments P that can be used for generation of a guide voice V (i.e., speech segments P that can be specified by a sound-specifying information Q). A registration datum E corresponding to a freely chosen speech segment P is a character string that represents speech content of the speech segment P. Thus, a character string that is derived by arranging multiple registration data E corresponding to multiple speech segment identification information N such that the arrangement corresponds to a combination of the multiple speech segment identification information N specified by a sound-specifying information Q corresponds to a speech character string (i.e., a related information C) of a guide voice V specified by the sound-specifying information Q. Each speech datum A in the guidance data ZA can be generated by recording a speech segment that is actually spoken by a particular speaker or by speech synthesis from a corresponding registration datum E.

The control device 62 realizes functions (a related information generator 72, an identification information generator 74, a first association manager 76, and a second association manager 78) for generating the management data ZB and the delivery data ZC by executing the program stored in the storage device 64. As shown in the example in FIG. 4, the management data ZB generated by the control device 62 are first stored in the storage device 64, and they are then forwarded from the communication device 66 to the information management apparatus 40 via the communication network 18. The delivery data ZC generated by the control device 62 are first stored in the storage device 64, and they are then forwarded from the communication device 66 to the terminal device 14 via the communication network 18. The management data ZB or the delivery data ZC may be forwarded from the information processing apparatus 16 using a portable storage medium, such as a semiconductor storage medium. For example, the management data ZB stored in a portable storage medium may be attached to the information processing apparatus 16 and be forwarded to the storage device 44.

As shown in the example in FIG. 4, at the time of generation of the management data ZB and of the delivery data ZC (hereinafter referred to as "registration processing"), the guidance instruction apparatus 20 successively outputs multiple sound-specifying information Q of all types that can be provided from the guidance instruction apparatus 20 to the voice guidance apparatus 30 when voice guidance is given by the guidance system 12. The multiple sound-specifying information Q output from the guidance instruction apparatus 20 are successively provided to the information processing apparatus 16 via the communication device 46 of the information management apparatus 40 and the communication network 18. That is, multiple types of guide voices V with different speech contents (different combinations of speech segments P) are successively indicated to the information processing apparatus 16 as targets of the registration processing. Here, a device (a simulator) dedicated to the registration processing may be used for provision of multiple sound-specifying information Q to the information processing apparatus 16, wherein the dedicated device is prepared separately from the guidance instruction apparatus 20 that is connected to the voice guidance apparatus 30 when voice guidance is given.

The related information generator 72 in FIG. 4 generates a related information C that is related to a guide voice V specified by a sound-specifying information Q. The related information generator 72 of the first embodiment generates a related information C that accords with the speech content of each of multiple speech segments P specified by the sound-specifying information Q by referring to the reference data ZD stored in the storage device 64. More specifically, the related information generator 72 acquires, from the reference data ZD in the storage device 64, a registration datum E of a speech segment P for each of multiple speech segment identification information N specified by the sound-specifying information Q. The related information generator 72 then arranges the registration datum E of each speech segment in an order specified by the sound-specifying information Q, thereby generating the related information C representative of a speech character string of the guide voice V.

As described in the above example, in the first embodiment, a related information C is generated by referring to the reference data ZD in which a registration datum E is recorded for each speech segment P. Accordingly, an advantage is obtained in that there can be easily generated a related information C that corresponds to a guide voice V that is formed by multiple speech segments P. Alternatively, a character string representative of a translation of a guide voice V may be generated as a related information C by computer translation of a speech character string of the guide voice V in a publicly known manner; or speech data of a translation of the speech character string may be generated as a related information C by publicly known speech synthesis from the translation of the speech character string.

The identification information generator 74 in FIG. 4 generates an identification information D of the guide voice V specified by the sound-specifying information Q. More specifically, an identification information D is selected such that multiple identification information D do not overlap with each other among guide voices V that are successively specified by provision of multiple sound-specifying information Q. For example, for each provision of a sound-specifying information Q, a guide voice V may be provided with a sequence number in sequence; or each guide voice V may be provided with one of random numbers that occur within a predetermined range and do not overlap with each other. For example, a numerical value that is determined by a predetermined calculation involving a sound-specifying information Q may be used as an identification information D corresponding to the sound-specifying information Q.

The first association manager 76 mutually associates a sound-specifying information Q with the corresponding identification information D generated by the identification information generator 74. More specifically, the first association manager 76 executes, for each of multiple sound-specifying information Q successively provided to the information processing apparatus 16, processing to add a combination of the sound-specifying information Q and the identification information D to the management data ZB in the storage device 64. Thus, at a stage where the registration processing is complete, there are generated in the storage device 64 the management data ZB in which each of multiple sound-specifying information Q that can be output from the guidance instruction apparatus 20 is associated with the corresponding identification information D.

The second association manager 78 mutually associates the identification information D generated by the identification information generator 74 with the corresponding related information C generated by the related information generator 72. More specifically, the second association manager 78 executes, for each of multiple sound-specifying information Q successively provided to the information processing apparatus 16, processing to add a combination of the identification information D and the related information C to the delivery data ZC in the storage device 64. Thus, in a state in which the registration processing is complete, there are generated in the storage device 64 the delivery data ZC in which the related information C of each of guide voices V that can be indicated to the voice guidance apparatus 30 with multiple sound-specifying information Q by the guidance instruction apparatus 20 is associated with the identification information D of the guide voice V.

As will be understood from the above description, for each of guide voices V that can be indicated by multiple sound-specifying information Q, the first association manager 76 defines a correspondence between a sound-specifying information Q corresponding to the guide voice V and an identification information D of the guide voice V, and the second association manager 78 defines a correspondence between the identification information D of the guide voice V and a related information C of the guide voice V. In other words, as will be understood from FIG. 4, a sound-specifying information Q specifying a guide voice V and a related information C of the guide voice V are each associated with a common identification information D of the guide voice V. After the management data ZB and the delivery data ZC are generated in the storage device 64 by the above registration processing, the management data ZB are forwarded from the communication device 66 to the information management apparatus 40 and are stored in the storage device 44, and the delivery data ZC are forwarded from the communication device 66 to the terminal device 14 and are stored in the storage device 52.

The timing at which the delivery data ZC are delivered to the terminal device 14 is not limited to the above example. For example, the delivery data ZC may be delivered from the information processing apparatus 16 to the terminal device 14 at a stage in which the terminal device 14 first activates the information presentation program, or at a stage in which the terminal device 14 first becomes available for communication after activation of the information presenting program. The already delivered delivery data ZC may be updated each time the information presentation program is activated. Furthermore, a case may be assumed in which the information processing apparatus 16 delivers the delivery data ZC to the terminal device 14 together with the information presentation program. The timing at which the management data ZB are delivered to the information management apparatus 40 may be freely chosen in a similar manner.

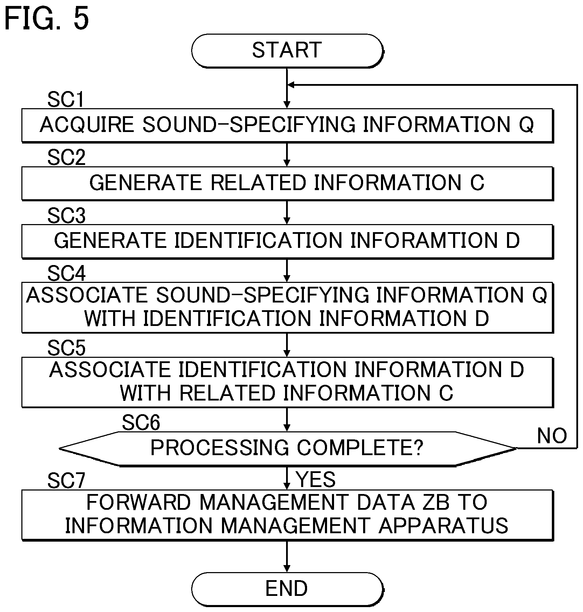

FIG. 5 is a flowchart of the registration processing executed by the information processing apparatus 16 of the first embodiment. With an instruction from a manager of the guidance system 12 serving as a trigger, there is initiated provision of a sound-specifying information Q from the guidance system 12 (guidance instruction apparatus 20) to the information processing apparatus 16 and the registration processing of FIG. 5.

After the control device 62 acquires a sound-specifying information Q via the communication device 66 (SC1), the related information generator 72 generates a related information C that is related to a guide voice V specified by the sound-specifying information Q by referring to the reference data ZD stored in the storage device 64 (SC2). The identification information generator 74 generates an identification information D of the guide voice V specified by the sound-specifying information Q (SC3). Here, the related information generator 72 may generate the related information C after the identification information generator 74 has generated the identification information D.

The first association manager 76 mutually associates the sound-specifying information Q with the identification information D generated by the identification information generator 74 (SC4). The second association manager 78 mutually associates the identification information D generated by the identification information generator 74 with the related information C generated by the related information generator 72 (SC5). Here, the order of execution of the processing by the first association manager 76 (SC4) and the processing by the second association manager 78 (SC5) may be reversed. For each provision of a sound-specifying information Q to the information processing apparatus 16 (SC1), generation of the related information C and of the identification information D (SC2 and SC3), associating of the sound-specifying information Q with the identification information D (SC4), and associating of the identification information D with the related information C (SC5), are repeated (SC6:NO). After the above processing is executed for every sound-specifying information Q that can be indicated by the guidance instruction apparatus 20 (SC6:YES), there are generated in the storage device 64 the management data ZB and the delivery data ZC. The first association manager 76 forwards the management data ZB stored in the storage device 64 from the communication device 66 to the information management apparatus 40 (SC7).

With a request from a terminal device 14 serving as a trigger, the second association manager 78 forwards the delivery data ZC stored in the storage device 64 from the communication device 66 to the terminal device 14 that has made the request. For example, the delivery data ZC are delivered to the terminal device 14 together with a program for causing a related information C to be output from the output device 58 for each emission of a guide voice V (a program that realizes the information retriever 502 and the output controller 504 in FIG. 1).

As described in the above example, in the first embodiment, a sound-specifying information Q that specifies a guide voice V and a related information C that is related to the guide voice V are each automatically associated with a common identification information D. Thus, in a case where a related information C of a guide voice V specified by a sound-specifying information Q is provided to a user of the terminal device 14 with emission of the guide voice V serving as a trigger, an advantage is obtained in that a correspondence between the guide voice V and the related information C can be managed easily and precisely.

There can be assumed a configuration (hereinafter referred to as a "comparative example") in which a sound component of a speech segment identification information N for each of speech segments P that form a guide voice V is emitted together with the guide voice V from the sound emitting device 36. In the comparative example, there is emitted a sound component of a speech segment identification information N for a speech segment P during a period in which the speech segment P is emitted from the sound emitting device 36 in accordance with a corresponding speech datum A. Since the speech segment P is short compared to the guide voice V, it may not be possible to secure a time period sufficiently long to allow emission of a sound component of a speech segment identification information N for each speech segment P. In contrast to the comparative example, in the first embodiment, a sound-specifying information Q is associated with an identification information D in the management data ZB, the sound-specifying information Q specifying an array of speech segments P that form a guide voice V. Accordingly, a time period for emitting the guide voice V can be used for emitting a sound component of the identification information D. As a result, compared to the comparative example in which there is emitted a sound component of a speech segment identification information N for each speech segment P, an advantage is obtained in that a sufficiently long time period is easily made available for conveying the identification information D.

### Second Embodiment

A second embodiment of the present invention will now be described in the following. In each mode described below as an example, elements with operations or functions similar to those in the first embodiment are denoted by the same reference signs as those used in the first embodiment, and detailed explanations of such elements are omitted, as appropriate.

In the first embodiment, the management data ZB and the delivery data ZC are generated in the registration processing before voice guidance is initiated by the guidance system 12. In the second embodiment, a case is assumed in which there may be output from the guidance instruction apparatus 20 a new sound-specifying information Q that is different from an existing sound-specifying information Q in speech content (a combination of speech segments P) of the guide voice V, the existing sound-specifying information Q having undergone the registration processing. In the second embodiment, the management data ZB and the delivery data ZC are updated successively in parallel with the guidance system 12 giving voice guidance.

Similarly to the first embodiment, after the guidance instruction apparatus 20 outputs a sound-specifying information Q when voice guidance is given, the voice guidance apparatus 30 generates a speech signal XA of a guide voice V and the information management apparatus 40 generates a modulation signal XB indicative of the identification information D of the guide voice V, and then, sound of an audio signal X (mixed sound of the guide voice V and a sound component of the identification information D) derived by synthesizing the speech signal XA and the modulation signal XB is emitted by the sound emitting device 36. In the second embodiment, the sound-specifying information Q that has been output from the guidance instruction apparatus 20 for voice guidance is forwarded from the guidance system 12 (information management apparatus 40) to the information processing apparatus 16, and registration processing for reflecting the sound-specifying information Q on the management data ZB and on the delivery data ZC is executed in the information processing apparatus 16.

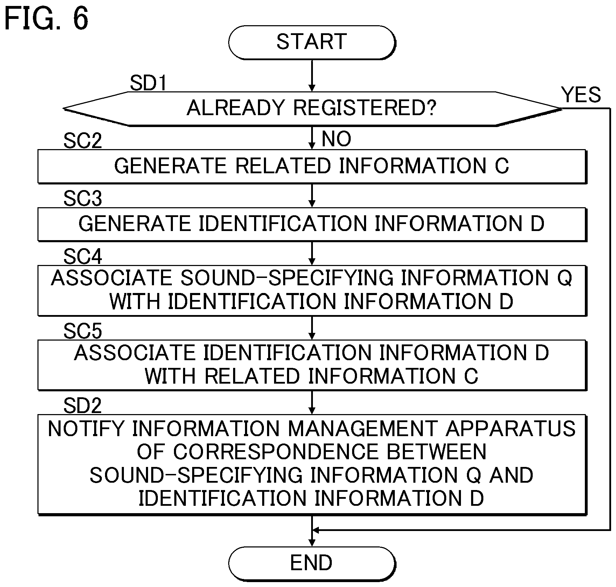

FIG. 6 is a flowchart of the registration processing in the second embodiment. With acquisition of a sound-specifying information Q serving as a trigger, the registration processing in FIG. 6 is initiated. After initiation of the registration processing, the identification information generator 74 determines whether the registration processing has been executed with respect to the sound-specifying information Q acquired from the guidance system 12 for this time (hereinafter referred to as "target sound-specifying information Q") (SD1). For example, the identification information generator 74 determines that the registration processing has been executed for the target sound-specifying information Q in a case where the target sound-specifying information Q is present in the management data ZB stored in the storage device 64 (SD1 :YES); whereas in a case where the target sound-specifying information Q is not present in the management data ZB, the identification information generator 74 determines that the registration processing has not been executed in the past for the target sound-specifying information Q (SD1 :NO). In a case where the registration processing has been executed for the target sound-specifying information Q (SD1 :YES), the registration processing ends without the subsequent processing (SC2 to SC5 and SD2) being executed.

In a case where the registration processing for the target sound-specifying information Q has not been executed in the past (SD1: NO), that is, in a case where the target sound-specifying information Q is a sound-specifying information Q that specifies a guide voice V with speech content different from that of guide voices V specified by multiple existing sound-specifying information Q for which the registration processing has been executed, there is executed processing for reflecting the new target sound-specifying information Q on the management data ZB and the delivery data ZC in the storage device 64. More specifically, generation of a related information C and of an identification information D (SC2 and SC3), associating of the sound-specifying information Q with the identification information D (SC4), and associating of the identification information D with the related information C (SC5), are executed with respect to the target sound-specifying information Q similarly to the first embodiment. Accordingly, a correspondence between the target sound-specifying information Q and the identification information D is added to the management data ZB; and a correspondence between the related information C for the guide voice V of the target sound-specifying information Q and the identification information D is added to the delivery data ZC.

The first association manager 76 notifies, via the communication device 66, the information management apparatus 40 of the correspondence between the target sound-specifying information Q and the identification information D in the management data ZB (SD2). In the information management apparatus 40, the correspondence between the target sound-specifying information Q and the identification information D, the correspondence having been notified by the information processing apparatus 16 (first association manager 76), is added to the management data ZB in the storage device 44. With a request from the terminal device 14 serving as a trigger, the second association manager 78 notifies, via the communication device 66, the terminal device 14 of a difference between the delivery data ZC in the storage device 64 and the delivery data ZC in the terminal device 14 (the correspondence between the identification information D and the related information C with respect to the new sound-specifying information Q). In the terminal device 14, the correspondence between the related information C and the identification information D, the correspondence having been notified by the information processing apparatus 16 (second association manager 78), is added to the delivery data ZC in the storage device 52.

As will be understood from the above example, with occurrence of a new sound-specifying information Q that differs from existing sound-specifying information Q having undergone the registration processing serving as a trigger, the management data ZB and the delivery data ZC are updated. Accordingly, it is possible to provide the terminal device 14 with a related information C with respect to a guide voice V specified by a new sound-specifying information Q that is added afterwards.

### Modifications

Each embodiment described above as an example can be modified in various manners. Specific exemplary modes of modification are described in the following. Two or more modes freely chosen from the following examples may be combined as appropriate, so long as the combined modes do not conflict with each other.
(1) The information processing apparatus 16 may centrally manage multiple sets of management data ZB wherein each set is used in one of different guidance systems 12. For example, a situation may be assumed in which a guidance system 12 is installed in each railway station. In the storage device 64 of the information processing apparatus 16, multiple sets of management data ZB that correspond to guidance systems 12 in different railway stations are generated and stored. Processing that the information processing apparatus 16 executes for any one of the guidance systems 12 is similar to that in the first embodiment. Here, the delivery data ZC need not be prepared separately for each guidance system 12. For example, a single set of delivery data ZC that include a related information C of a guide voice V that will be emitted by multiple guidance systems 12 may be centrally generated and be stored in the storage device 52 of the terminal device 14. In this way, it is possible to provide to users the related information C of the guide voice V at multiple railway stations, in each of which a different guidance system 12 is installed.
(2) By a configuration in which a single sound-specifying information Q is associated with multiple identification information D in the management data ZB, it is possible to transmit multiple identification information D to the terminal device 14, with emission of a freely chosen guide voice V serving as a trigger. The signal generator 424 generates a modulation signal XB that includes a sound component of the multiple identification information D corresponding to the single sound-specifying information Q. The information retriever 502 of the terminal device 14 retrieves the multiple identification information D from an audio signal Y that is derived from sound received upon emission of the guide voice V, and the output controller 504 causes the output device 58 to output multiple related information C that each correspond to one of the multiple identification information D.
   In the delivery data ZC, there are recorded, for example, multiple related information C indicative of character strings (hereinafter referred to as "fixed phrases") typical among speech contents of guide voices V and multiple related information C indicative of character strings that can be inserted into the fixed phrases (hereinafter referred to as "insertion phrases"). The output controller 504 identifies, from the delivery data ZC, multiple related information C that correspond to the multiple identification information D retrieved by the information retriever 502, the multiple related information C including a related information C indicative of a fixed phrase and a related information C indicative of an insertion phrase. The output controller 504 then causes the output device 58 to display a character string derived by adding the insertion phrase to the fixed phrase. By the above configuration, it is possible to notify a user of multiple kinds of character strings derived by inserting each of different insertion phrases into a common fixed phrase.
(3) In each of the above-described modes, a sound-specifying information Q that specifies speech content (an array of speech segments P) of a guide voice V is described as an example. Alternatively, a sound-specifying information Q may specify speech content of a guide voice V and a time length (hereinafter referred to as "speech period") of the guide voice V. The signal generator 424 of the information management apparatus 40 refers to the speech period of the guide voice V and selects a position, along a time axis, of a modulation signal XB representative of a sound component of an identification information D (i.e., selects a time section during which the identification information D is to be transmitted by sound communication). For example, the signal generator 424 starts to provide the modulation signal XB to the voice guidance apparatus 30 at a time point at which a predetermined time length has passed since the beginning of the speech period. By this configuration, it is possible to define a transmission timing of the identification information D relative to the speech period of the guide voice V.
(4) A configuration to represent a guide voice V by a combination of speech segments P may be omitted. For example, speech data A representative of waveforms of guide voices V that can be specified by multiple sound-specifying information Q are recorded in the guidance data ZA; while for each of the guide voices V, a registration datum E representative of a character string of speech content of the guide voice V is recorded in the reference data ZD. The signal generator 322 of the voice guidance apparatus 30 identifies, from the guidance data ZA, a speech datum A for a guide voice V specified by a sound-specifying information Q and generates a speech signal XA. The related information generator 72 of the information processing apparatus 16 identifies, from the reference data ZD, as the related information C, the registration datum E of the guide voice V specified by the sound-specifying information Q.
(5) In each of the above-described modes, an exemplary configuration is shown in which the delivery data ZC generated by the information processing apparatus 16 are delivered to the terminal device 14. Alternatively, the delivery data ZC may be retained in a delivery device that can communicate with the terminal device 14 via the communication network 18. The information processing apparatus 16 may be used as the delivery device. More specifically, after the information retriever 502 retrieves an identification information D, the communication device 54 of the terminal device 14 transmits to the delivery device an information request that specifies the retrieved identification information D. The delivery device acquires from the delivery data ZC a related information C corresponding to the identification information D specified by the information request and transmits the related information C to the request-source terminal device 14. The output controller 504 of the terminal device 14 causes the output device 58 to output the related information C received from the delivery device. In the above configuration, since there is no need to retain the delivery data ZC in the terminal device 14, an advantage is obtained in that a storage capacity required of the storage device 64 is reduced. Furthermore, since a related information Q that is provided to multiple terminal devices 12 is centrally managed in the delivery device, an advantage is obtained in that a correspondence between the guide voice V and the related information C can be easily and precisely updated. For example, since there is no need to update a related information C separately for each terminal device 12 upon addition of a sound-specifying information Q, the correspondence between the guide voice V and the related information C can be updated promptly (ideally, in real time).
   As shown in the example of the first embodiment, in a configuration in which the delivery data ZC generated by the registration processing in advance are delivered to and retained by the terminal device 14, an advantage is obtained in that, without communication via the communication network 18, a related information C that corresponds to a guide voice V can be acquired by the terminal device 14 and can be output from the output device 58.
(6) In each of the above-described modes, an identification information D is transmitted to the terminal device 14 via sound communication that uses sound as the medium of transmission, but a communication method for transmitting an identification information D to the terminal device 14 is not limited to sound communication. For example, in parallel with or subsequent to emission of a guide voice V by the guidance system 12, an identification information D may be transmitted to the terminal device 14 via wireless communication that uses electromagnetic waves, such as radio waves or infrared rays, as a medium of transmission. As will be understood from the above examples, short-range wireless communication that does not involve the communication network 18 is preferable for transmission of an identification information D, and sound communication using sound as a medium of transmission and wireless communication using electromagnetic waves as a medium of transmission are each an example of short-range wireless communication. It should be noted, however, that a communication method of an identification information D is not limited to short-range wireless communication. For example, an identification information D may be transmitted via the communication network 18 to the terminal device 14 that has been registered in advance as an information providing destination (i.e., an identification information D may be push-delivered).
(7) In each of the above-described modes, an exemplary case is described in which a guidance system 12 is used for providing voice guidance in a railway station. However, the facility in which a guidance system 12 is installed is not limited to a railway station. For example, the guidance system 12 described in each of the above modes may be used for providing guidance related to various facilities that include: a transport system such as a train or a bus (e.g., in a vehicle); airport facilities; commercial facilities such as shopping malls; exhibition facilities such as galleries or museums; fitness facilities such as stadiums or gymnastic halls; and accommodation facilities such as hotels or Japanese-style inns.
(8) In the second embodiment, an exemplary configuration is described in which the information processing apparatus 16 (identification information generator 74) determines whether a sound-specifying information Q has been registered or not. Alternatively, the information management apparatus 40 may determine whether a sound-specifying information Q has been registered. For example, the information manager 422 of the information management apparatus 40 determines whether the registration processing has been executed for a target sound-specifying information Q provided by the guidance instruction apparatus 20 by referring to the management data ZB in the storage device 44. In a case where the registration processing has not been executed in the past for the target sound-specifying information Q, the target sound-specifying information Q is transmitted from the information management apparatus 40 to the information processing apparatus 16, and the registration processing is executed similarly to the second embodiment. In a case where the registration processing has been executed in the past for the target sound-specifying information Q, transmission of the target sound-specifying information Q to the information processing apparatus 16 (and therefore, the registration processing in the information processing apparatus 16) is omitted. By the above configuration, an advantage is obtained in that in a case where a sound-specifying information Q has been registered, there is no need for communication between the information management apparatus 40 and the information processing apparatus 16.
(9) As mentioned above, the information processing apparatus 16 described in each of the above embodiments is realized by the control device 62 and the program coordinating with each other. The program according to a preferred mode causes a computer (e.g., the control device 62) to function as: the related information generator 72 that generates a related information C that is related to a guide voice V specified by a sound-specifying information Q; an identification information generator 74 that generates an identification information D that is to be notified to a terminal device 14 upon emission of the guide voice V; a first association manager 76 that associates the sound-specifying information Q with the identification information D; and a second association manager 78 that associates the related information C with the identification information D. The program described above can be provided in a form of a computer-readable storage medium having the program stored thereon, and is installable in a computer. The storage medium is, for example, a non-transitory storage medium, a good example of which is an optical storage medium (an optical disk) such as a CD-ROM. Examples of such a storage medium may also include any type of publicly known storage medium, such as a semiconductor storage medium or a magnetic storage medium. A non-transitory storage medium here encompasses any storage medium except for a transitory, propagating signal, and a volatile storage medium is not excluded. It is possible to provide the program to a computer by distribution via a communication network.
(10) The present invention can be understood as an operation method (information processing method) for the information processing apparatus 16 described in each of the above embodiments. More specifically, in the information processing method according to a preferred mode, the information processing apparatus 16 (a system formed by a single computer or by multiple computers) generates a related information C that is related to a guide voice V specified by a sound-specifying information Q, generates an identification information D that is to be notified to a terminal device 14 upon emission of the guide voice V, associates the sound-specifying information Q with the identification information D, and associates the related information C with the identification information D.
(11) From the above-described embodiments, the following exemplary configurations can be understood.

### Mode 1

An information processing apparatus according to a preferred mode (mode 1) of the present invention includes: a related information generator configured to generate a related information that is related to a guide voice specified by a sound-specifying information; an identification information generator configured to generate an identification information that is to be notified to a terminal device upon emission of the guide voice; a first association manager configured to associate the sound-specifying information with the identification information; and a second association manager configured to associate the related information with the identification information. In the above mode, a sound-specifying information that specifies a guide voice and a related information that is related to the guide voice are each associated with a common identification information. Accordingly, in a case where the related information of the guide voice is provided to a user of a terminal device with emission of the guide voice specified by the sound-specifying information serving as a trigger, an advantage is obtained in that a correspondence between the guide voice and the related information can be easily and precisely managed.

### Mode 2

In a preferred mode (mode 2) of mode 1, the sound-specifying information specifies an array of speech segments that form the guide voice. In this mode, the identification information is associated with the sound-specifying information that specifies an array of speech segments that form the guide voice. Accordingly, compared to a configuration in which each speech segment in a guide voice is associated with an identification information, an advantage is obtained in that a sufficiently long time period can be easily ensured for notification of the identification information.

### Mode 3

In a preferred mode (mode 3) of mode 2, the related information generator generates the related information that accords with speech content of each of the speech segments specified by the sound-specifying information by referring to reference data that represent speech content of each speech segment. In this mode, since the related information that accords with speech content of each of the speech segments specified by the sound-specifying information is generated by referring to the registration data representative of speech content of each speech segment, an advantage is obtained in that there can be easily generated the related information that is appropriate and corresponds to the guide voice specified by the sound-specifying information.

### Mode 4

In a preferred mode (mode 4) of any one of mode 1 to mode 3, generation of a related information by the related information generator and generation of an identification information by the identification information generator are executed for each of multiple sound-specifying information in series, the multiple sound-specifying information specifying guide voices that differ from each other and including the sound-specifying information. The first association manager generates management data in which each of the multiple sound-specifying information is associated with a corresponding one of multiple identification information; and the second association manager generates delivery data in which each of multiple related information is associated with a corresponding one of the multiple identification information, the multiple related information corresponding one-to-one with the multiple sound-specifying information. In this mode, there are generated an identification information table, in which each of multiple sound-specifying information is associated with a corresponding identification information, and a related information table, in which each of multiple related information is associated with a corresponding identification information. Accordingly, for each of the multiple guide voices, it is possible to realize provision of the corresponding related information with emission of the guide voice serving as a trigger.

### Mode 5

In a preferred mode (mode 5) of any one of mode 1 to mode 3, for each of multiple sound-specifying information provided in series from a guidance instruction apparatus, registration processing is executed in a case where the registration processing has not been executed in the past for each sound-specifying information, whereas the registration processing is omitted in a case where the registration processing has been executed for each sound-specifying information. The registration processing here includes: generation of a related information by the related information generator; generation of an identification information by the identification information generator; associating of the sound-specifying information with the identification information by the first association manager; and associating of the related information with the identification information by the second association manager. In this mode, the registration processing is executed for a sound-specifying information for which the registration processing has not been executed in the past, and the registration processing is omitted for a sound-specifying information for which the registration processing has been executed. Accordingly, it is possible to provide a user of a terminal device with a related information for a guide voice that is specified by a new sound-specifying information that is added afterwards.

### Mode 6

In a preferred mode (mode 6) of any one of mode 1 to mode 5, the first association manager separately generates, for each of multiple guidance systems, management data in which a sound-specifying information that specifies a guide voice emitted by the guidance system is associated with an identification information of the guide voice; and the second association manager generates, for the multiple guidance systems as a whole, delivery data in which multiple related information that are related to guide voices are each associated with an identification information of a corresponding one of the guide voices, each of the guide voices being emitted by one of the multiple guidance systems. In this mode, the management data in which a sound-specifying information is associated with an identification information are separately generated for each of the multiple guidance systems, whereas the delivery data in which a related information is associated with an identification information are generated for the multiple guidance systems as a whole.

### Mode 7

An information processing method according to a preferred mode (mode 7) of the present invention includes: generating a related information that is related to a guide voice specified by a sound-specifying information; generating an identification information that is to be notified to a terminal device upon emission of the guide voice; associating the sound-specifying information with the identification information; and associating the related information with the identification information. In this mode, a sound-specifying information that specifies a guide voice and a related information that is related to the guide voice are each associated with a common identification information. Accordingly, in a case where the related information of the guide voice is provided to the user of the terminal device with emission of the guide voice specified by the sound-specifying information serving as a trigger, an advantage is obtained in that a correspondence between the guide voice and the related information can be managed easily and precisely.

### Mode 8 and Mode 9

An information management apparatus according to a preferred mode (mode 8) of the present invention includes: an information manager configured to identify an identification information that corresponds to a sound-specifying information output from a guidance instruction apparatus by referring to management data in which, for each of multiple guide voices, a sound-specifying information that specifies an array of speech segments forming the guide voice is associated with an identification information of the guide voice; and a signal generator configured to generate a modulation signal indicative of the identification information identified by the information manager. In a preferred mode (mode 9), the signal generator generates the modulation signal that includes a sound component indicative of the identification information.

### Mode 10

An information management method according to a preferred mode (mode 10) of the present invention includes: identifying an identification information that corresponds to a sound-specifying information output from a guidance instruction apparatus by referring to management data in which, for each of multiple guide voices, a sound-specifying information that specifies an array of speech segments forming the guide voice is associated with an identification information of the guide voice; and generating a modulation signal indicative of the identified identification information.

### Description of Reference Signs

12... guidance system; 14...terminal device, 16...information processing apparatus; 18... communication network; 20... guidance instruction apparatus; 30... voice guidance apparatus; 32... control device; 322... signal generator; 324... signal synthesizer; 34... storage device; 36... sound emitting device; 40...information management apparatus; 42... control device; 422...information manager; 424... signal generator; 44... storage device; 46... communication device; 50... control device; 502... information retriever; 504... output controller; 52... storage device; 54... communication device; 56...sound receiving device; 58...output device; 62...control device; 64... storage device; 66... communication device; 72...related information generator; 74... identification information generator; 76... first association manager; 78... second association manager.

## Claims

1. An information processing apparatus comprising:
a related information generator configured to generate a related information that is related to a guide voice specified by a sound-specifying information;
an identification information generator configured to generate an identification information that is to be notified to a terminal device upon emission of the guide voice;
a first association manager configured to associate the sound-specifying information with the identification information; and
a second association manager configured to associate the related information with the identification information.

2. The information processing apparatus according to claim 1,
wherein the sound-specifying information specifies an array of speech segments that form the guide voice.

3. The information processing apparatus according to claim 2,
wherein the related information generator generates the related information that accords with speech content of each of the speech segments specified by the sound-specifying information by referring to reference data that represent speech content of each speech segment.

4. The information processing apparatus according to any one of claims 1 to 3,
wherein generation of a related information by the related information generator and generation of an identification information by the identification information generator are executed for each of multiple sound-specifying information in series, the multiple sound-specifying information specifying guide voices that differ from each other and including the sound-specifying information,
wherein the first association manager generates management data in which each of the multiple sound-specifying information is associated with a corresponding one of multiple identification information, and
wherein the second association manager generates delivery data in which each of multiple related information is associated with a corresponding one of the multiple identification information, the multiple related information corresponding one-to-one with the multiple sound-specifying information.

5. The information processing apparatus according to any one of claims 1 to 3,
wherein for each of multiple sound-specifying information provided in series from a guidance instruction apparatus, registration processing is executed in a case where the registration processing has not been executed in the past for each sound-specifying information, whereas the registration processing is omitted in a case where the registration processing has been executed for each sound-specifying information, and
wherein the registration processing includes: generation of a related information by the related information generator; generation of an identification information by the identification information generator; associating of the sound-specifying information with the identification information by the first association manager; and associating of the related information with the identification information by the second association manager.

6. The information processing apparatus according to any one of claims 1 to 5,
wherein the first association manager separately generates, for each of multiple guidance systems, management data in which a sound-specifying information that specifies a guide voice emitted by the guidance system is associated with an identification information of the guide voice; and
wherein the second association manager generates, for the multiple guidance systems as a whole, delivery data in which multiple related information that are related to guide voices are each associated with an identification information of a corresponding one of the guide voices, each of the guide voices being emitted by one of the multiple guidance systems.

7. An information processing method comprising:
generating a related information that is related to a guide voice specified by a sound-specifying information;
generating an identification information that is to be notified to a terminal device upon emission of the guide voice;
associating the sound-specifying information with the identification information; and
associating the related information with the identification information.

8. An information management apparatus comprising:
an information manager configured to identify an identification information that corresponds to a sound-specifying information output from a guidance instruction apparatus by referring to management data in which, for each of multiple guide voices, a sound-specifying information that specifies an array of speech segments forming the guide voice is associated with an identification information of the guide voice; and
a signal generator configured to generate a modulation signal indicative of the identification information identified by the information manager.

9. The information management apparatus according to claim 8,
wherein the signal generator generates the modulation signal that includes a sound component indicative of the identification information.

10. An information management method comprising:
identifying an identification information that corresponds to a sound-specifying information output from a guidance instruction apparatus by referring to management data in which, for each of multiple guide voices, a sound-specifying information that specifies an array of speech segments forming the guide voice is associated with an identification information of the guide voice; and
generating a modulation signal indicative of the identified identification information.
